# EUROPEAN PATENT APPLICATION

(11) **EP 4 664 279 A1**
(43) Date of publication of application: **17.12.2025**
(21) Application number: 24182080.2
(22) Date of filing: 13.06.2024
(51) Int. Cl.: G06F 9/451, G06F 8/30, G05B 19/418, G06F 8/38

(54) **REMOTE APP SYSTEM USING CUSTOM INTERACTION CHANNELS**

(71) Applicant: ABB SCHWEIZ AG, 5400 Baden (CH)
(72) Inventor: KOZIOLEK, Heiko, 76227 Karlsruhe (DE); HARK, Rhaban, 64347 Griesheim (DE)
(74) Representative: Maiwald GmbH

(57) **Abstract**

There is disclosed a method for adjusting an appearance and interactions with and of desktop applications through a web application in industrial plant. The method comprises embedding a minimal desktop application (113) at a desktop computer and/or server computer (110); establishing a communication channel (121) between the minimal desktop application (113) and a remote desktop client (131, 132) embedded in the web application (133); obtaining, at the desktop computer and/or the server computer (110), first data (D1) indicative of a first user interface associated with an application at the desktop computer and/or the server computer (110); obtaining, at the minimal desktop application (113), second data indicative of a second user interface associated with the application, wherein the second user interface is based on removing at least one of window control elements, window borders, and menu bars from the first user interface; and based on the second data, streaming the application from the minimal desktop application (113) into the remote desktop client (131, 132) via the communication channel (121).

## Description

### FIELD OF THE INVENTION

The invention relates to a Remote App System using Custom Interaction Channels.

### BACKGROUND

Despite the widespread migration of many modern software applications from rich-client, desktop-based user interfaces to web-based user interfaces, there are still many applications for which such a migration is cost-prohibitive. Running such applications on separate desktop computers would provide a poor user experience, as the user would need to continuously switch between web applications and desktop applications, which would be tedious. Furthermore, desktop applications restrict users to a specific operating system, whereas web applications are accessible from any operating system that can run a web browser. HTML5-based Remote Desktop Clients exist, but they expose the entire desktop of a remote server, which is often undesired. They can be configured to expose individual remote apps, but in this case they do not adapt the user interaction paradigms from the desktop application to the web application, again resulting in poor user experience.

Hence, there are several drawbacks available regarding the integration of user interfaces of existing desktop-based applications into new web-based user interfaces.

### SUMMARY

In view of the above, it is an object of the present disclosure to overcome at least part of the drawbacks available regarding the integration of user interfaces of existing desktop-based applications into new web-based user interfaces.

Therefore, to address one or more of these drawbacks, there is provided, in a first aspect, a method for adjusting an appearance and interactions with and of desktop applications through a web application in industrial plant. The method comprises embedding a minimal desktop application at a desktop computer and/or server computer. The method further comprises establishing a communication channel between the minimal desktop application and a remote desktop client embedded in the web application. The method further comprises obtaining, at the desktop computer and/or the server computer, first data indicative of a first user interface associated with an application at the desktop computer and/or the server computer. The method further comprises obtaining, at the minimal desktop application, second data indicative of a second user interface associated with the application, wherein the second user interface is based on removing at least one of window control elements, window borders, and menu bars from the first user interface. The method further comprises, based on the second data, streaming the application from the minimal desktop application into the remote desktop client via the communication channel.

The method of the first aspect may be computer implemented.

It shall be noted that obtaining the first data may comprise obtaining the first user interface. Further, according to several examples of the present disclosure, the first user interface may be understood to be a user interface, which may be (depending on an implementation of the first user interface for example) shown to or available for a user at the desktop computer and/or the server computer, when the application is running at the desktop computer and/or the server computer. However, it shall further be noted that the first user interface may not necessarily be visible to anyone except a web application streaming the first user interface (and the user using this web application). Obtaining the second data may comprise obtaining the second user interface. Further, according to several examples of the present disclosure, the second user interface may be understood to be the first user interface, which may be shown to or available for a user at the desktop computer and/or the server computer, when the application is running at the desktop computer and/or the server computer, wherein at least one of window control elements, window borders, and menu bars are removed from the first user interface. However, for reasons of completeness, it shall be noted that in general, the second user interface may also use the full view, i.e. none of the window control elements, window borders, and menu bars may be removed from the first user interface. Thus, the second user interface may be understood to represent a reduced first user interface. According to several examples of the present disclosure, the streaming may comprise streaming the second user interface into the remote desktop client.

The method according to the first aspect is advantageous in that it may participate in enabling for allowing users to interact with old and new applications from the same user interface, providing a streamlined user experience. Hence, it is enabled for embedding desktop applications into web-applications without migrating them to web technologies. In doing so, security and user experience are increased by using a Minimal Desktop Application that modifies the user interface and handles custom interaction commands. The method of the first aspect may further provide the ability to customize an invocation of context menus or an interaction with graphical elements to the paradigms of web applications. As a result, according to several examples of the present disclosure, there is achieved a familiar look and feel for classical desktop applications in web browsers, wherein an expensive migration of existing applications is avoided. In addition, there is achieved a low latency interaction and high scalability to many applications in parallel on the same web page.

According to several examples of the present disclosure, the method may further comprise establishing a custom interaction channel between the minimal desktop application and the remote desktop client. The method may further comprise obtaining, at the minimal desktop application, a navigation request for navigating in the streamed application, the navigation request made by a user of the application. The method may further comprise issuing the navigation request to the remote desktop client via the custom interaction channel. The method may further comprise navigating in the streamed application based on the issued navigation request.

It shall be noted that the custom interaction channel is different from the communication channel. A navigation request may be a request made by the user by use of an operation device and/or navigation device, like by use of a computer mouse for example. The use of the computer mouse may comprise a click operation made by the user onto the computer mouse and/or a movement operation made by the user by moving the computer mouse, for example.

Such custom communication channel may allow for adapting graphical elements, such as context menus, or issuing application navigation requests that would otherwise be impossible using only the graphical user interface exposed by the remote desktop application. Hence, applying the method of the first aspect may comprise using a custom interaction channel for the remote desktop connection to handle application-specific navigation requests or input handlings. Thus, the method of the first aspect may further provide the ability to customize an invocation of context menus or an interaction with graphical elements to the paradigms of web applications. As a result, according to several examples of the present disclosure, there is achieved a familiar look and feel for classical desktop applications in web browsers, wherein an expensive migration of existing applications is avoided. In addition, there is achieved a low latency interaction and high scalability to many applications in parallel on the same web page.

According to several examples of the present disclosure, the method may further comprise obtaining, at the minimal desktop application, an interaction of the user with the application. The method may further comprise translating the interaction into a custom interaction message. The method may further comprise issuing the custom interaction message to the remote desktop client via the custom interaction channel. The method may further comprise displaying the custom interaction message in the streamed application.

It shall be noted that such interaction may comprise, for example, that the user operates the operation device and/or navigation device. For example, the user may use the computer mouse to click onto an element (like a button, an icon, a drop down menu, etc.) shown in (or comprised by) the second user interface and/or to perform a right-click (or left-click) operation onto the shown second user interface.

Hence, an interaction of the user with the application is further increased, and alignment in comparison to in case the application was running at the desktop computer and/or server computer is further achieved. Thus, applicability for the user is further increased.

According to several examples of the present disclosure, the method may further comprise obtaining, at the minimal desktop application, a desktop-based user interface, UI, element associated with the first user interface and/or the second user interface. The method may further comprise translating the desktop-based UI element into a web-application-based UI element. The method may further comprise issuing the web-application-based UI element to the remote desktop client via the custom interaction channel. The method may further comprise displaying the web-application-based UI element in the streamed application.

It shall be noted that the desktop-based UI element may be an element for receiving a user operation and/or for triggering an operation in case of receiving a user operation. The desktop-based UI element may comprise at least one of a button, an icon and a drop down menu.

Hence, an interaction of the user with the application is further increased, and alignment in comparison to in case the application was running at the desktop computer and/or server computer is further achieved. Thus, applicability for the user is further increased.

According to several examples of the present disclosure, the establishing of the custom interaction channel may comprise at least one of:
- establishing the custom interaction channel as an application specific communication channel for issuing navigation requests;
- establishing the custom interaction channel as an application specific communication channel for user interactions;
- establishing the custom interaction channel as an application specific communication channel for translating desktop-based UI elements into web-application-based UI elements; and
- establishing the custom interaction channel as an application specific communication channel for context menu generation.

It shall be noted that a context menu may comprise a context menu that is shown in case the user may perform a right-click (or left-click) operation onto the shown second user interface.

Hence, an interaction of the user with the application is further increased, and alignment in comparison to in case the application was running at the desktop computer and/or server computer is further achieved. Thus, applicability for the user is further increased.

According to several examples of the present disclosure, wherein the establishing of the custom interaction channel may comprise establishing the custom interaction channel based on a dynamic virtual channel according to the remote desktop protocol, RDP.

However, although RDP is mentioned as a specific example, it shall be noted that there may also be several alternative solutions available for establishing the custom interaction channel. For example, alternative technologies may be VNC (Virutal Network Computing), X11-Forwarding via SSH and proprietary implementations from e.g., TeamViewer or Citrix.

It shall be noted that regarding RDP, for example between client and server, there may be several channels like an Input/Output (I/O) Channel or a Message Channel. Further, there may be available (i.e. preset, pre-established, prepared or provided) several Static Virtual Channels (SVCs) and several Dynamic Virtual Channels (DVCs). The establishing of the custom interaction channel may be based on such DVC. Moreover, regarding DVCs, a DVC may be created dynamically after connection is established at any time, via special static channel DRDYNVC. There may be an unlimited number of DVCs per connection. Developers may create extensions that create DVCs.

Hence, an efficient and applicable solution for establishing of the custom interaction channel is provided.

According to several examples of the present disclosure, the establishing of the custom interaction channel may comprise establishing one or more custom interaction channels.

Hence, efficiency and applicability for establishing of the custom interaction channel is further increased.

According to several examples of the present disclosure, the embedding of the minimal desktop application may comprise exposing the minimal desktop application using a remote application endpoint on the desktop computer and/or the server computer.

Hence, an efficient and applicable embedding of the minimal desktop application is provided.

According to a second aspect, there is provided a data processing apparatus for adjusting an appearance and interactions of a web application in industrial plant. The data processing apparatus comprising a processor being configured to carry out the method of the first aspect.

The data processing apparatus according to the second aspect is advantageous in that it may participate in enabling for allowing users to interact with old and new applications from the same user interface, providing a streamlined user experience. Hence, it is enabled for embedding desktop applications into web-applications without migrating them to web technologies. In doing so, security and user experience are increased by using a Minimal Desktop Application that modifies the user interface and handles custom interaction commands. Furthermore, the custom communication channel may allow for adapting graphical elements, such as context menus, or issuing application navigation requests that would otherwise be impossible using only the graphical user interface exposed by the remote desktop application. Hence, using the data processing apparatus of the second aspect may comprise using a custom interaction channel for the remote desktop connection to handle application-specific navigation requests or input handlings. The data processing apparatus of the second aspect may further provide the ability to customize an invocation of context menus or an interaction with graphical elements to the paradigms of web applications. As a result, according to several examples of the present disclosure, there is achieved a familiar look and feel for classical desktop applications in web browsers, wherein an expensive migration of existing applications is avoided. In addition, there is achieved a low latency interaction and high scalability to many applications in parallel on the same web page.

According to a third aspect, there is provided a data processing system or remote application system for adjusting an appearance and interactions of a web application in industrial plant. The remote application system comprising the data processing apparatus of the second aspect, and/or the remote application system comprising means for carrying out the method of the first aspect.

The remote application system according to the third aspect is advantageous in that it may participate in enabling for allowing users to interact with old and new applications from the same user interface, providing a streamlined user experience. Hence, it is enabled for embedding desktop applications into web-applications without migrating them to web technologies. In doing so, security and user experience are increased by using a Minimal Desktop Application that modifies the user interface and handles custom interaction commands. Furthermore, the custom communication channel may allow for adapting graphical elements, such as context menus, or issuing application navigation requests that would otherwise be impossible using only the graphical user interface exposed by the remote desktop application. Hence, using the remote application system of the third aspect may comprise using a custom interaction channel for the remote desktop connection to handle application-specific navigation requests or input handlings. The remote application system of the third aspect may further provide the ability to customize an invocation of context menus or an interaction with graphical elements to the paradigms of web applications. As a result, according to several examples of the present disclosure, there is achieved a familiar look and feel for classical desktop applications in web browsers, wherein an expensive migration of existing applications is avoided. In addition, there is achieved a low latency interaction and high scalability to many applications in parallel on the same web page.

According to a fourth aspect, there is provided an industrial plant comprising a data processing apparatus of the second aspect and/or a remote application system of the third.

By "industrial plant", according to several examples, it may be meant an industrial plant or industrial production plant comprising one or more pipelines, production lines and/or assembly lines for transforming one or more educts into a product and/or for assembling one or more components into a final product. According to several examples, it may be meant an industrial plant in oil industry, in gas industry or in chemical industry.

The industrial plant according to the fourth aspect is advantageous in that it may participate in enabling for allowing users to interact with old and new applications from the same user interface, providing a streamlined user experience. Hence, it is enabled for embedding desktop applications into web-applications without migrating them to web technologies. In doing so, security and user experience are increased by using a Minimal Desktop Application that modifies the user interface and handles custom interaction commands. Furthermore, the custom communication channel may allow for adapting graphical elements, such as context menus, or issuing application navigation requests that would otherwise be impossible using only the graphical user interface exposed by the remote desktop application. Hence, using the industrial plant of the fourth aspect may comprise using a custom interaction channel for the remote desktop connection to handle application-specific navigation requests or input handlings. The industrial plant of the fourth aspect may further provide the ability to customize an invocation of context menus or an interaction with graphical elements to the paradigms of web applications. As a result, according to several examples of the present disclosure, there is achieved a familiar look and feel for classical desktop applications in web browsers, wherein an expensive migration of existing applications is avoided. In addition, there is achieved a low latency interaction and high scalability to many applications in parallel on the same web page.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

The computer-readable medium according to the fifth aspect is advantageous in that it may participate in enabling for allowing users to interact with old and new applications from the same user interface, providing a streamlined user experience. Hence, it is enabled for embedding desktop applications into web-applications without migrating them to web technologies. In doing so, security and user experience are increased by using a Minimal Desktop Application that modifies the user interface and handles custom interaction commands. Furthermore, the custom communication channel may allow for adapting graphical elements, such as context menus, or issuing application navigation requests that would otherwise be impossible using only the graphical user interface exposed by the remote desktop application. Hence, using the computer-readable medium of the fifth aspect may comprise using a custom interaction channel for the remote desktop connection to handle application-specific navigation requests or input handlings. The computer-readable medium of the fifth aspect may further provide the ability to customize an invocation of context menus or an interaction with graphical elements to the paradigms of web applications. As a result, according to several examples of the present disclosure, there is achieved a familiar look and feel for classical desktop applications in web browsers, wherein an expensive migration of existing applications is avoided. In addition, there is achieved a low latency interaction and high scalability to many applications in parallel on the same web page.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

The computer program product according to the sixth aspect is advantageous in that it may participate in enabling for allowing users to interact with old and new applications from the same user interface, providing a streamlined user experience. Hence, it is enabled for embedding desktop applications into web-applications without migrating them to web technologies. In doing so, security and user experience are increased by using a Minimal Desktop Application that modifies the user interface and handles custom interaction commands. Furthermore, the custom communication channel may allow for adapting graphical elements, such as context menus, or issuing application navigation requests that would otherwise be impossible using only the graphical user interface exposed by the remote desktop application. Hence, using the computer program product of the sixth aspect may comprise using a custom interaction channel for the remote desktop connection to handle application-specific navigation requests or input handlings. The computer program product of the sixth aspect may further provide the ability to customize an invocation of context menus or an interaction with graphical elements to the paradigms of web applications. As a result, according to several examples of the present disclosure, there is achieved a familiar look and feel for classical desktop applications in web browsers, wherein an expensive migration of existing applications is avoided. In addition, there is achieved a low latency interaction and high scalability to many applications in parallel on the same web page.

According to a seventh aspect, there is provided a use of a data processing apparatus of the second aspect, and/or of a remote application system of the third aspect, and/or of an industrial plant of the fourth aspect.

The use according to the seventh aspect is advantageous in that it may participate in enabling for allowing users to interact with old and new applications from the same user interface, providing a streamlined user experience. Hence, it is enabled for embedding desktop applications into web-applications without migrating them to web technologies. In doing so, security and user experience are increased by using a Minimal Desktop Application that modifies the user interface and handles custom interaction commands. Furthermore, the custom communication channel may allow for adapting graphical elements, such as context menus, or issuing application navigation requests that would otherwise be impossible using only the graphical user interface exposed by the remote desktop application. Hence, such use according to the seventh aspect may comprise using a custom interaction channel for the remote desktop connection to handle application-specific navigation requests or input handlings. The use according to the seventh aspect may further provide the ability to customize an invocation of context menus or an interaction with graphical elements to the paradigms of web applications. As a result, according to several examples of the present disclosure, there is achieved a familiar look and feel for classical desktop applications in web browsers, wherein an expensive migration of existing applications is avoided. In addition, there is achieved a low latency interaction and high scalability to many applications in parallel on the same web page.

Optional features of the first aspect may form part of any of the second to seventh aspects, mutatis mutandis.

The computer-readable medium of the fifth aspect may have stored thereon the computer program product of the sixth aspect.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 depicts components of a Remote Application System according to several examples of the present disclosure;
- Figure 2 illustrates a flowchart indicative of a method according to several examples of the present disclosure;
- Figure 3 shows a block diagram schematically illustrating a data processing apparatus according to several examples of the present disclosure; and
- Figure 4 illustrates an example for a control flow in the Remote Application System according to several examples of the present disclosure.

### DETAILED DESCRIPTION

According to several examples of the present disclosure, for integrating the user interface of existing desktop-based applications, like of existing Windows-based application, into new web-based user interfaces without changing them, there is provided a custom Remote App System built on top of a remote desktop streaming software. The Remote App System may provide special mechanisms to adapt the appearance and interactions of desktop applications to web applications. Thus, the Remote App System may allow users to interact with old and new applications from the same user interface, providing a streamlined user experience.

In more detail, a HTML5-based Remote Desktop Client may be embedded into a web application and may then be enhanced with custom communication channels to interact with the desktop application. To adapt the user interface for a web application, the desktop application information may be exposed via a "Minimal Desktop Application" that hides windows controls and menu bars. This "Minimal Desktop Application" may be exposed using a Remote App endpoint on a Remote Desktop Server. The custom communication channel may allow for adapting graphical elements, such as context menus, or issuing application navigation requests that would otherwise be impossible using only the graphical user interface exposed by the remote desktop application.

Hence, according to several examples of the present disclosure, there is provided a Remote Application System that may use a Minimal Desktop Application and a custom communication channel in combination with regular remote desktop communication.

Thus, the Remote Application System enables for embedding desktop applications into web-applications without migrating them to web technologies. In doing so, security and user experience are increased by using a Minimal Desktop Application that modifies the user interface and handles custom interaction commands. Using the Remote Application System may comprise using a custom interaction channel for the remote desktop connection to handle application-specific navigation requests or input handlings. The Remote Application System further provides the ability to customize an invocation of context menus or an interaction with graphical elements to the paradigms of web applications.

As a result, according to several examples of the present disclosure, there is achieved a familiar look and feel for classical desktop applications in web browsers, wherein an expensive migration of existing applications is avoided. In addition, there is achieved a low latency interaction and high scalability to many applications in parallel on the same web page.

According to several examples of the present disclosure, the Remote Application System described in the following is a special type of remote desktop application that allows integrating the views and interaction capabilities of desktop-based, rich-client applications into a web application. Existing HTML5-based RDP (Remote Desktop Protocol) Clients stream the entire operating system desktop into the browser, or expose a single RemoteApp as-is, without modifying its user interface or interaction capabilities. This can lead to security issues, since the user gets access to all application in the remote computer, and may lead to poor user experience, since the desktop-based user interface elements get exposed in the web application, which violates typical web application user interface conventions (e.g., regarding context menus, window control elements, etc.). With the system described in the following, the desktop application is embedded into a web application in a seamless way and an application specific communication channel is established on top of the used remote desktop communication-channel that allows for issuing custom navigation requests and translating desktop-based UI elements into web-application based UI elements.

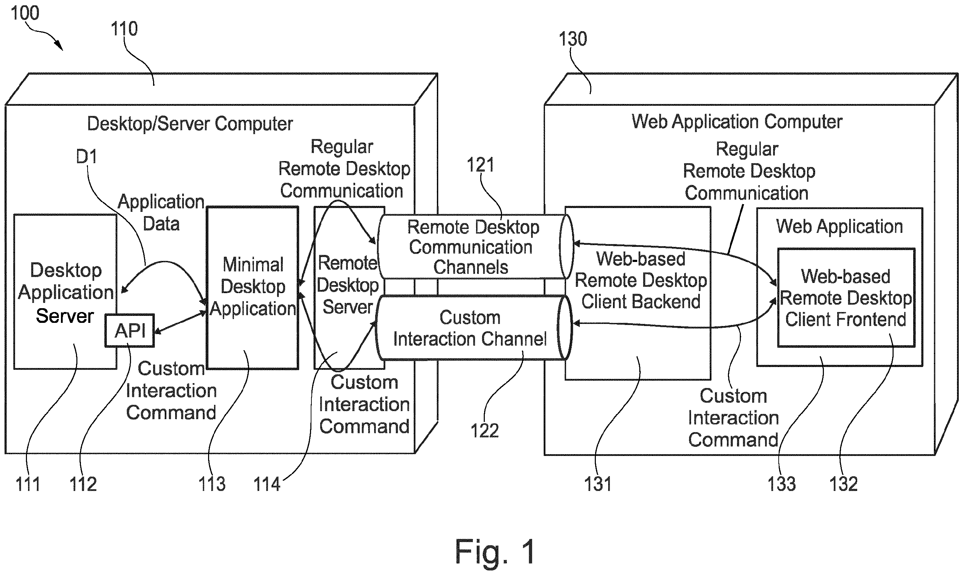

Referring now to Figure 1, Figure 1 depicts the components of the Remote Application System 100. The Remote Application System 100is divided into a Desktop/Server Computer 110 and a Web Application Computer 130. Arbitrary web clients, e.g., browsers on smartphones, tablets, or desktop computers can connect the Web Application.

In more detail, the Desktop/Server Computer 110 may comprise the following components:
Desktop Application Server 111: The Desktop Application Server 111 is a headless server application that provides information for GUI desktop applications, which for example display graphics, animations, tables or texts from the server application. The Desktop Application Server 111 provides an application programming interface API 112 to receive custom interaction commands, like navigating to a different view for example.
Minimal Desktop Application 113: The Minimal Desktop Application 113 is a desktop application with a graphical user interface that is customized to remove menu bars, windows control elements and window borders. The Minimal Desktop Application 113 can however display the same graphics, animations, tables, and texts as a regular GUI desktop application in its main body. With the slight graphical customizations, it prepares the desktop application to be embedded into a web application 133. The Minimal Desktop Application 113 can also translate certain interactions, like invoking a context menu for example, into custom interaction messages, so that they can be displayed in the web application 133 in a seamless manner using for example widgets used in the web application 133. The Minimal Desktop Application 113 is communicatively connected with the Desktop Application Server 111 for exchanging application data D1.

It shall be noted that in an alternative solution according to several examples of the present disclosure, the desktop application may not necessarily be split into a frontend-like part, which may be represented by the Minimal Desktop Application 113, and a backend-like part which may be represented by the Desktop Application Server 111.

Remote Desktop Server 114: The Remote Desktop Server 114 is a feature of desktop-based operating systems and allows users to access the underlying computer remotely. The Remote Desktop Server 114 continuously sends screen images from the server to the remote client and also transmits mouse and keyboard inputs remotely. This allows users to interact with the desktop environment as if they were physically present. The Remote Desktop Server 114 can be configured to expose individual applications (Remote App endpoint). As part of the proposed Remote Application System 100, the Remote Desktop Server 114 particularly exposes the Minimal Desktop Application 113 on such a Remote App endpoint. The often used Remote Desktop Protocol (RDP) allows for creating dynamic virtual channels, like Custom Interaction Channels 122 as indicated in Figure 1, on top of standard remote channels, like Remote Desktop Communication Channels 121 as indicated in Figure 1. This feature is used in the Remote Application System 100 to handle custom interaction commands and translate between desktop-paradigms and web-application-paradigms.

Furthermore, the Web Application Computer 130 may comprise the following components:
Web-based Remote Desktop Client Backend 131: The Web-based Remote Desktop Client Backend 131 is a software service that serves as the backend for the web application 133. The Web-based Remote Desktop Client Backend 131 communicates via a RDP with the Remote Desktop Server 114 and passes through all user requests.
Web-based Remote Desktop Client Frontend 132: The Web-based Remote Desktop Client Frontend 132 is a software component directly integrated into a web application 133 by using JavaScript for example. The Web-based Remote Desktop Client Frontend 132 issues requests to the backend to establish remote connections, authenticate the user, forward user requests from mouse or keyboard. The Web-based Remote Desktop Client Frontend 132 is also responsible for adapting the view and interaction of the desktop application to the web application 133. For example, the Web-based Remote Desktop Client Frontend 132 can send navigation IDs via the Custom Interaction Channel 122 to the Minimal Desktop Application 113. This can enable a navigation from the web application 133, even if no buttons or navigation elements are provided on the remotely streamed graphics. Another example is rendering a web-based context menu if the user clicks, for example, the right mouse button and using information from the Custom Interaction Channel 122 for that.
Web Application 133: The web application 133 is a typical web application, for example programmed in HTML5 & JavaScript. The web application 133 is hosted by a web server and provides a web end-point for browser-based connections. The web application 133 may arrange the remotely streamed view in a way to follow the design guidelines of the web application 133. The web application 133 may embed multiple remote desktop client frontends on the same web page, for example to display multiple applications side-by-side.

According to several examples of the present disclosure, regarding a communication between the Desktop/Server Computer 110 and the Web Application Computer 130, the following is to be considered.

Remote Desktop Communication Channels 121: The Remote Desktop Communication Channels 121 provide means for standard functionality of the streaming. This includes especially forwarding of the window display, but also mouse movement, mouse and key events, audio and clipboard.

Custom Interaction Channels 122: The Custom Interaction Channels 122 provide application-specific communication means. First, through the Custom Interaction Channels 122 navigation requests to navigate in the streamed application are forwarded. The user can therefore use the remote streamed application as native part of the surrounding web interface. Atop channels for context menu generation and user interaction may be created.

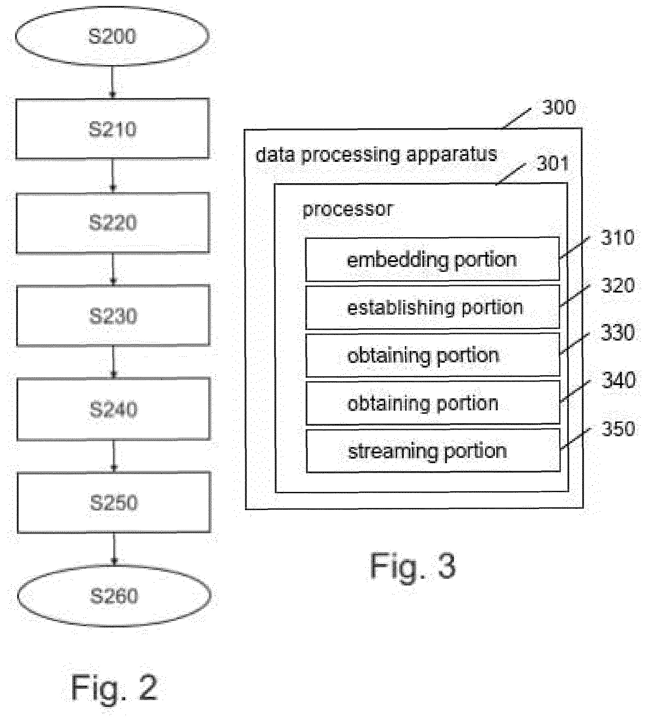

Referring now to Figure 2, Figure 2 illustrates a flowchart indicative of a method according to several examples of the present disclosure. The method is a method for adjusting an appearance and interactions of a web application 133 in industrial plant according to several examples of the present disclosure.

The method according to Figure 2 may be applied at such Desktop/Server Computer 110 as shown with reference to Figure 1.

The method starts in S200.

In S210, the method comprises embedding a minimal desktop application 113 at a desktop computer and/or server computer 110.

In S220, the method comprises establishing a communication channel 121 between the minimal desktop application 113 and a remote desktop client 131, 132 embedded in the web application 133.

In S230, the method comprises obtaining, at the desktop computer and/or the server computer 110, first data D1 indicative of a first user interface associated with an application at the desktop computer and/or the server computer 110.

In S240, the method comprises obtaining, at the minimal desktop application 113, second data indicative of a second user interface associated with the application, wherein the second user interface is based on removing at least one of window control elements, window borders, and menu bars from the first user interface.

In S250, the method comprises, based on the second data, streaming the application from the minimal desktop application 113 into the remote desktop client 131, 132 via the communication channel 121.

The method ends in S260.

Referring now to Figure 3, Figure 3 shows a block diagram schematically illustrating a data processing apparatus 300 according to several examples of the present disclosure. In particular, according to several examples of the present disclosure, there is provided a data processing apparatus 300 for adjusting an appearance and interactions of a web application in industrial plant. The data processing apparatus 300 comprising a processor 301 being configured to carry out the method of Figure 2.

In more detail, according to various examples, a data processing apparatus 300 being configured to carry out the method of Figure 2 may comprise a processing circuitry, a processing function, a processing means, a processing unit or a processor 301, which enables the data processing apparatus 300 to participate in adjusting an appearance and interactions of a web application in industrial plant. The processor 301 may comprise one or more processing portions or functions, wherein the processing portions or functions may be provided as one or more physical or virtual entities. The data processing apparatus 300 may comprise one or more communication interfaces. The data processing apparatus 300 may further comprise a memory or memory unit for storing data, programs and/or instructions to be executed by the processor. The memory may be a memory internal to the data processing apparatus 300 or may be a memory external to the data processing apparatus 300, for example at a cloud server. The processor 301 may comprise one or more portions, which enable the data processing apparatus 300 to execute the method of Figure 2, for example. According to several examples of the present disclosure, an embedding portion 310 may be configured to perform such embedding according to S210 of Figure 2, an establishing portion 320 may be configured to perform such establishing according to S220 of Figure 2, an obtaining portion 330 may be configured to perform such obtaining according to S230 of Figure 2, an obtaining portion 340 may be configured to perform such obtaining according to S240 of Figure 2, and a streaming portion 350 may be configured to perform such streaming according to S250 of Figure 2.

According to various examples, such data processing apparatus 300 may represent or function as such desktop/server computer 110 as shown with reference to Figure 1.

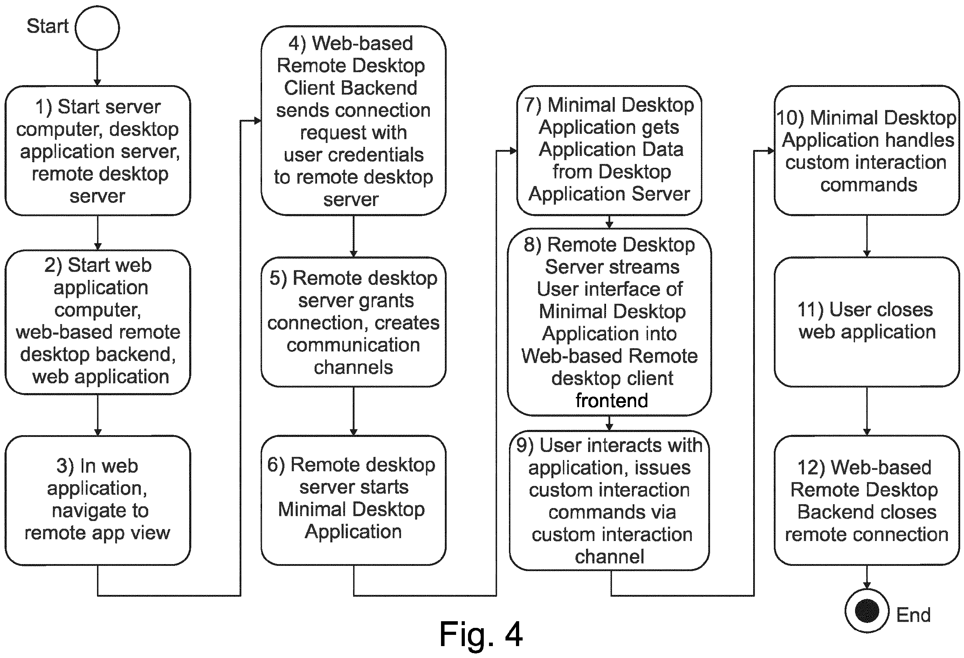

Referring now to Figure 4, Figure 4 illustrates an example flow through the Remote App System 100 of Figure 1 according to several examples of the present disclosure, the flow comprising twelve steps, i.e. Step 1) to Step 12).

In Step 1), the flow comprises to start a sever computer 110, desktop application server 111, and remote desktop server 114.

In Step 2), the flow comprises to start a web application computer 130, web-based remote desktop backend 131, and web application 133.

In Step 3), the flow comprises, in the web application 133, to navigate to remote app view. Step 3 could be executed several times leading to the subsequent steps, i.e. the below-outlined steps after Step 3, being executed in parallel multiple times. Such execution may be performed by a same "web application computer" or by different "web application computers".

In Step 4), the web-based remote desktop client backend 131 sends a connection request with user credentials to the remote desktop server 114.

In Step 5), the remote desktop server 114 grants connection, creates communication channels 121.

In Step 6), the remote desktop server 114 starts the minimal desktop application 113. In Step 7), the minimal desktop application 113 gets application data D1 from the desktop application server 111.

In Step 8), the remote desktop server 114 streams a user interface of the minimal desktop application 113 into the web-based remote desktop client frontend 132.

In Step 9), a user interacts with the application, issues custom interaction commends via custom interaction channel 122.

In Steo 10), the minimal desktop application 113 handles the custom interaction commands. From Step 10, Step 9 can be reached again. The interaction between Step 9 and Step 10 may be a continuous interaction pattern instead of a linear sequence.

In Step 11), the user closes the web application 133.

In Step 12), the web-based remote desktop backend 131 closes the remote connection, and the flow ends.

According to several examples of the present disclosure, there is provided a data processing system or remote application system 100 for adjusting an appearance and interactions of a web application 133 in industrial plant. The system 100 comprising a data processing apparatus 300 as outlined above with reference to Figure 3. Additionally or alternatively, the system 100 comprises means for carrying out the method of Figure 2 and/or of Figure 4.

According to several examples of the present disclosure, there is provided an industrial plant comprising a data processing apparatus 300 as outlined above with reference to Figure 3. Additionally or alternatively, the industrial plant comprising the remote application system 100 for adjusting an appearance and interactions of a web application 133 in industrial plant.

According to several examples of the present disclosure, there is provided a computer-readable medium comprising instructions which, when executed by a computing system, causes the computing system to perform the method of Figure 2 and/or to perform the method of Figure 4. The computer-readable medium may be transitory or non-transitory, volatile or non-volatile.

According to several examples of the present disclosure, there is provided a computer program product comprising instructions which, when executed by a computing system, enable or cause the computing system to perform the method of Figure 2 and/or of Figure 4. The computer program product may comprise a computer-readable medium comprising instructions of the computer program product.

According to several examples of the present disclosure, there is provided a use of a data processing apparatus 300 as outlined above with reference to Figure 3, and/or of the remote application system 100 as outlined above with reference to Figure 1, and/or of an industrial plant as outlined above.

The method according to Figure 2 and/or Figure 4 may be computer implemented.

Optional features of the methods according to Figure 2 and/or Figure 4 may form part of any of the data processing apparatus 300, the remote application system 100, the industrial plant, the computer-readable medium, the computer program product, and the use, mutatis mutandis.

According to several examples of the present disclosure, as a mere example for improving understandability, it shall be noted a prototypical implementation of the remote application system 100 as disclosed herein was realized by the present inventors by use of "Apache Guacamole" as clientless remote desktop gateway.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

### REFERENCE SIGNS:

- 100: remote application system
- 110: desktop computer and/or server computer
- 111: desktop application server
- 112: API
- 113: minimal desktop application
- 114: remote desktop server
- 121: (remote desktop) communication channel
- 122: custom interaction channel
- 130: web application computer
- 131: web-based remote desktop client backend
- 132: web-based remote desktop client frontend
- 133: web application
- D1: first data

## Claims

1. A method for adjusting an appearance and interactions with and of desktop applications through a web application in industrial plant, the method comprising:
embedding (S210) a minimal desktop application (113) at a desktop computer and/or server computer (110);
establishing (S220) a communication channel (121) between the minimal desktop application (113) and a remote desktop client (131, 132) embedded in the web application (133);
obtaining (S230), at the desktop computer and/or the server computer (110), first data (D1) indicative of a first user interface associated with an application at the desktop computer and/or the server computer (110);
obtaining (S240), at the minimal desktop application (113), second data indicative of a second user interface associated with the application, wherein the second user interface is based on removing at least one of window control elements, window borders, and menu bars from the first user interface; and
based on the second data, streaming (S250) the application from the minimal desktop application (113) into the remote desktop client (131, 132) via the communication channel (121).

2. The method according to claim 1, wherein the method further comprises:
establishing a custom interaction channel (122) between the minimal desktop application (113) and the remote desktop client (131, 132);
obtaining, at the minimal desktop application (113), a navigation request for navigating in the streamed application, the navigation request made by a user of the application;
issuing the navigation request to the remote desktop client (131, 132) via the custom interaction channel (122); and
navigating in the streamed application based on the issued navigation request.

3. The method according to claim 1 or 2, wherein the method further comprises
obtaining, at the minimal desktop application (113), an interaction of the user with the application;
translating the interaction into a custom interaction message;
issuing the custom interaction message to the remote desktop client (131, 132) via the custom interaction channel (122); and
displaying the custom interaction message in the streamed application.

4. The method according to any of claims 1 to 3, wherein the method further comprises:
obtaining, at the minimal desktop application (113), a desktop-based user interface, UI, element associated with the first user interface and/or the second user interface;
translating the desktop-based UI element into a web-application-based UI element;
issuing the web-application-based UI element to the remote desktop client (131, 132) via the custom interaction channel (122); and
displaying the web-application-based UI element in the streamed application.

5. The method according to any of claims 2 to 4, wherein the establishing of the custom interaction channel (122) comprises at least one of:
- establishing the custom interaction channel (122) as an application specific communication channel for issuing navigation requests;
- establishing the custom interaction channel (122) as an application specific communication channel for user interactions;
- establishing the custom interaction channel (122) as an application specific communication channel for translating desktop-based UI elements into web-application-based UI elements; and
- establishing the custom interaction channel (122) as an application specific communication channel for context menu generation.

6. The method according to any of claims 2 to 5, wherein the establishing of the custom interaction channel (122) comprises establishing the custom interaction channel (122) based on a dynamic virtual channel according to the remote desktop protocol, RDP.

7. The method according to any of claims 2 to 6, wherein the establishing of the custom interaction channel (122) comprises establishing one or more custom interaction channels.

8. The method according to any of claims 1 to 7, wherein the embedding of the minimal desktop application (113) comprises exposing the minimal desktop application (113) using a remote application endpoint on the desktop computer and/or the server computer (110).

9. A data processing apparatus (110) for adjusting an appearance and interactions of a web application in industrial plant, wherein the data processing apparatus (110) comprises a processor being configured to perform the method according to any of claims 1 to 8.

10. A remote application system (100) for adjusting an appearance and interactions of a web application in industrial plant, wherein the remote application system (100) comprises means for performing the method according to any of claims 1 to 8 and/or wherein the remote application system (100) comprises the data processing apparatus (110) according to claim 9.

11. A computer-readable medium comprising instructions which, when executed by a computing system, cause the computing system to perform the method according to any of claims 1 to 8.

12. A computer program product comprising instructions which, when executed by a computing system, enable and/or cause the computing system to perform the method according to any of claims 1 to 8.

13. Use of the data processing apparatus (110) according to claim 9 and/or use of the remote application system (100) according to claim 10 and/or use of the computer-readable medium according to claim 11.
